# EUROPÄISCHE PATENTANMELDUNG

(11) **EP 1 632 274 A1**
(43) Veröffentlichungstag der Anmeldung: **08.03.2006**
(21) Anmeldenummer: 05012595.4
(22) Anmeldetag: 11.06.2005
(51) Int. Cl.: A63F 13/10, A63F 3/04

(54) **Online Multimedia Kreuzworträtsel**

(30) Priorität: 01.09.2004 DE 102004042907
(71) Anmelder: Deutsche Telekom AG, 53113 Bonn (DE)
(72) Erfinder: Beyer, Rolf, Dipl.-Ing, 53639 Königswinter (DE)

(57) **Zusammenfassung**

Die Erfindung betrifft ein Verfahren zur Steuerung eines Computersystems zur Darstellung eines Kreuzworträtsels auf einem Display, wobei die Felder des Kreuzworträtsels interaktiv ausgestaltet sind, wobei beschreibende Felder interaktiv auswählbar sind, wodurch ein Beschreibungstext dargestellt wird und/oder ein Sound-Information abgespielt wird und/oder Bildinformationen dargestellt werden und/oder Video-Informationen dargestellt werden, wobei die Felder über einen Tastaturcursor und/oder ein Zeigegerät ansteuerbar sind, um ausgewählt zu werden für die Darstellung der Beschreibung oder um eine Eingabe vorzunehmen. In einer weiteren Ausführung wird bei kleinen Displays das Feld vergrößert dargestellt, auf dem der Tastaturcursor oder das Zeigegerät angeordnet ist, wobei vorzugsweise sowohl der Inhalt als auch die Beschreibenden digitalen Informationen dargestellt werden.

## Beschreibung

Die Erfindung betrifft ein Verfahren und eine Vorrichtung für ein interaktives Multimediaspiel, insbesondere ein Kreuzworträtsel, das so aufgebaut ist, dass es mit Multimediasystemen nutzbar ist.

Aus dem Stand der Technik sind eine Reihe von Systemen bekannt, die zur Eingabe von Kreuzworträtseln dienen wie aus den Druckschriften US3863931, US2170664 bekannt.

Auch sind eine Reihe von Verfahren bekannt, um eine Lösung eines Kreuzworträtsels herbeizuführen, so zum Beispiel DE19844254.

Die Druckschriften DE19923066, US436973 und US5566942 beschreiben Lösungen, wie erreicht wird, dass "Papierkreuzworträtsel" auf einen (speziellen) Rechner transferiert werden.

Die DE10156579 beschreibt Eingabehilfen insbesondere in Form einer Handschrifterkennung einzelner Buchstaben.

Aufgabe der vorliegenden Erfindung ist es, ein Verfahren und eine Vorrichtung bereitzustellen, die insbesondere auf kleinen mobilen Computern eine intuitive Nutzung bereitstellt, so dass die Benutzerführung vereinfacht wird und der Systemaufwand verringert wird.

Gelöst wird diese Aufgabe durch eine Erfindung mit den Merkmalen der unabhängigen Ansprüche. Die Unteransprüche beschreiben weitere Ausführungsformen.

Insbesondere wird die Erfindung gelöst durch ein Verfahren zur Steuerung eines Computersystems zur Darstellung eines Kreuzworträtsels auf einem Display, wobei die Felder des Kreuzworträtsels interaktiv ausgestaltet sind. So sind beschreibende Felder interaktiv auswählbar, wodurch ein Beschreibungstext dargestellt wird oder eine Sound-Information abgespielt wird oder eine Bildinformationen dargestellt wird oder Video-Informationen dargestellt werden.

Der Computer ist ein mobiles Endgerät, das vorzugsweise eine Netzwerkschnittstelle aufweist, wie ein Handy, PDA oder Smarthone.

Die Felder sind über einen Tastaturcursor oder ein Zeigegerät ansteuerbar, um für die Darstellung der Beschreibung ausgewählt zu werden oder um eine Eingabe vorzunehmen.

In einer weiteren Ausführungsform wird bei kleinen Displays das Feld vergrößert dargestellt, auf dem der Tastaturcursor oder das Zeigegerät angeordnet ist, wobei vorzugsweise der Inhalt als auch die beschreibenden digitalen Informationen dargestellt werden. Es erfolgt folglich eine digitale Zoomfunktion.

So kann z.B. bei Eingabefeldern eine Eingabematrix mit Buchstaben angezeigt werden, die durch den Tastaturcursor oder das Zeigegerät auswählbar ist. Diese Eingabematrix kann schon eine Begrenzung der auszuwählenden Buchstaben darstellen.

Auch das Lösungswort kann automatisch ausgefüllt werden. Hierfür werden die Buchstaben, die das Lösungswort bestimmen, automatisch im Lösungswort angezeigt, ohne dass ein Übertrag stattfindet. Diese Lösung kann dann über ein Netzwerk online gesendet werden, und ein Gewinn vorzugsweise ebenfalls online als digitale Daten bereitgestellt werden.

So kann der Gewinn in Form einer digitalen Sound- und/oder Videoinformation bereitgestellt werden. Ein Weiterleiten des Gewinns kann per SMS oder MMS erfolgen.

Damit das Spiel zu einem späteren Zeitpunk weitergeführt werden kann, ist eine Speicherung von digitalen Informationen über den Zustand für spätere Fortführung, vorzugsweise mit Identitätslogin, möglich. Diese Daten beschreiben die bisher durchgeführten Aktionen. Das Speichern kann sowohl lokal als auch auf dem Server erfolgen.

Das Kreuzworträtsel ist eine digital Information, die über das Internet oder Intranet ladbar ist und vorzugsweise in Form von Java, Javascript html, xhtml, .net abgelegt ist, so dass sie durch den Computer ausführbar sind, wobei die Spiellogik entweder vollständig, teilweise oder gar nicht auf dem Computer abläuft, oder alternativ auf einem Netzwerkserver.
- Fig. 1: ein Beispiel eines Kreuzworträtsels, wie es aus dem Stand der Technik bekannt ist;
- Fig. 2: eine Anwendung des erfindungsgemäßen Verfahrens wobei ein beschreibendes Feld größer dargestellt wird;
- Fig. 3: eine Anwendung des erfindungsgemäßen Verfahrens wobei ein beschreibendes Feld als Video dargestellt wird;
- Fig. 4: eine Anwendung des erfindungsgemäßen Verfahrens wobei eine Buchstaben Auswahl angeboten wird, für die einzugebenden Daten.

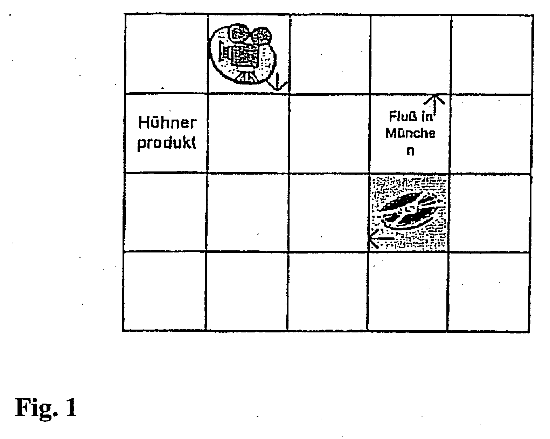

Die Figur 1 zeigt ein Kreuzworträtsel wie es bekannt ist, jedoch auf einem digitalen System dargestellt. So kann das Rätsel z.B. als Java-Applikation online aufgerufen werden.

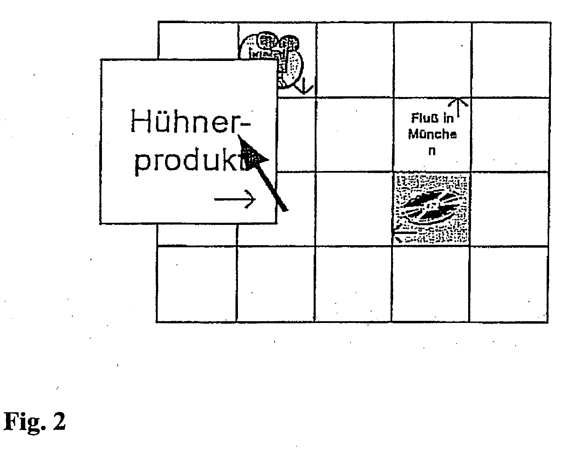

Alle Felder sind interaktiv, also keine eingescannte Vorlage. Die beschreibenden Felder können über die Cursortasten angesteuert und per "Mausklick" aktiviert werden. Dies zeigt die Figur 2, bei der eine Aktivierung dargestellt wird.

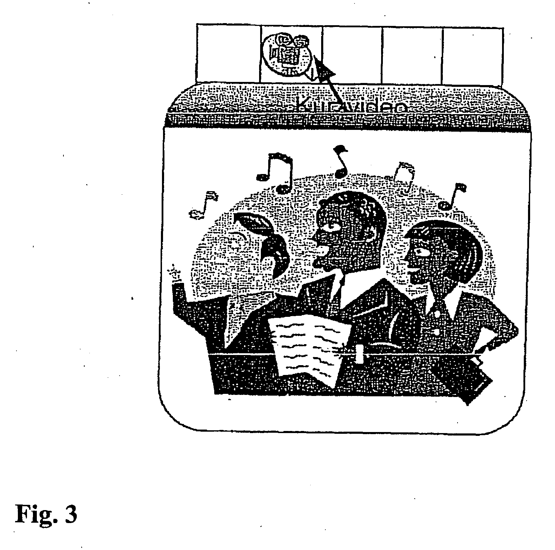

Dabei wird entweder der Beschreibungstext hervorgehoben (als Box dargestellt) oder es können auch Wav-Dateien, Bilder bzw. Video-Clips aufgerufen werden. Bsp: "Wer sang dieses Lied ::::, geben Sie den Nachnamen an" oder "In welcher Stadt steht dieses Gebäude", dargestellt werden (Figur 3).

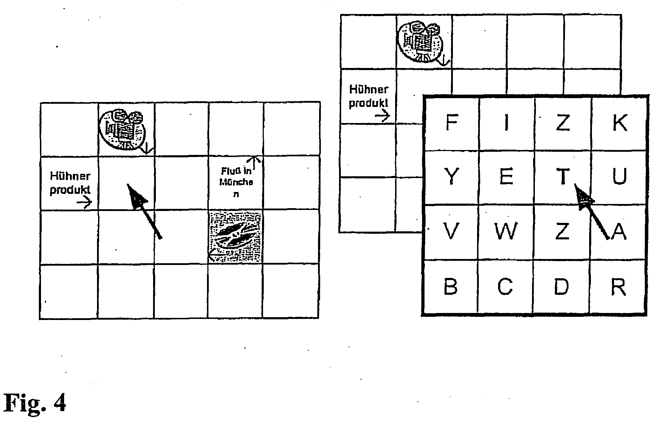

Auszufüllende Felder können über die Cursortasten angesteuert und per "Mausklick" aktiviert werde. Hier hilft eine "Eingabehilfe" weiter. Es wird eine Matrix mit z.B 16 Buchstaben angezeigt, aus der der vermutlich richtige Buchstabe ausgewählt werden kann (Figur 4).

Das Lösungswort wird automatisch ermittelt (die relevanten Ausfüllfelder werden z.B. farblich unterlegt), kann aber ggf. auch manuell gefüllt werden. Das Versenden der Lösung kann per Knopfdruck erfolgen (check ggf. programmintern).

Bei richtiger Lösung erhält der Kunde einen "Sofortgewinn" in Form einer "attraktiven Multimedia-Datei" (s.u.). Ein Aufhänger könnte der "Sofortgewinn" sein, beispielsweise ein Videoclip (-3 Sekunden) von einem VIP oder eines wichtigen Ereignisses, nach dem Motto "Gewinnen Sie ein Lächeln von Britney Spears" (oder ein Zwinkern von Robbie Williams).

Natürlich sollte es möglich sein, den "Gewinn" per MMS an Freunde weiterzuleiten - angereichert mit etwas Werbung...

Die URL des Rätsels könnte über das Internet z.B. T-Zones erreichbar sein oder per Werbe-SMS versendet werden.

## Patentansprüche

1. Verfahren zur Steuerung eines Computersystems zur Darstellung eines Kreuzworträtsels auf einem Display, wobei die Felder des Kreuzworträtsels interaktiv ausgestaltet sind,
- wobei beschreibende Felder interaktiv auswählbar sind, wodurch ein Beschreibungstext dargestellt wird und/oder ein Sound-Information abgespielt wird und/oder Bildinformationen dargestellt werden und/oder Video-Informationen dargestellt werden,
- wobei die Felder über einen Tastaturcursor und/oder ein Zeigegerät ansteuerbar sind, um ausgewählt zu werden für die Darstellung der Beschreibung oder um eine Eingabe vorzunehmen.

2. Verfahren nach dem vorhergehenden Anspruch, **dadurch gekennzeichnet, dass** bei kleinen Displays das Feld vergrößert dargestellt wird, auf dem der Tastaturcursor oder das Zeigegerät angeordnet ist, wobei vorzugsweise der Inhalt als auch die beschreibenden digitalen Informationen dargestellt werden.

3. Verfahren nach einem oder mehreren der vorhergehenden Ansprüche, **dadurch gekennzeichnet, dass** bei Eingabefeldern vorzugsweise eine Eingabematrix mit Buchstaben angezeigt wird, die durch den Tastaturcursor oder das Zeigegerät auswählbar ist.

4. Verfahren nach einem oder mehreren der vorhergehenden Ansprüche, **dadurch gekennzeichnet, dass** das Lösungswort automatisch ausgefüllt wird.

5. Verfahren nach dem vorhergehenden Anspruch, **dadurch gekennzeichnet, dass** ein Versenden der Lösung über ein Netzwerk online erfolgt, und ein Gewinn vorzugsweise digital bereitgestellt wird.

6. Verfahren nach einem oder mehreren der vorhergehenden Ansprüche, **dadurch gekennzeichnet, dass** der Gewinn in Form einer digitalen Sound- und/oder Videoinformation bereitgestellt wird.

7. Verfahren nach dem vorhergehenden Anspruch, **dadurch gekennzeichnet, dass** ein Weiterleiten des Gewinns per SMS oder MMS erfolgt.

8. Verfahren nach einem oder mehreren der vorhergehenden Ansprüche, **dadurch gekennzeichnet, dass** eine Speicherung von digitalen Informationen über den Zustand für spätere Fortführung, vorzugsweise mit Identitätslogin erfolgt.

9. Verfahren nach einem oder mehreren der vorhergehenden Ansprüche, **dadurch gekennzeichnet, dass** der Computer ein mobiles Endgerät ist, das vorzugsweise eine Netzwerkschnittstelle aufweist, wie ein Handy, PDA oder Smarthone.

10. Verfahren nach einem oder mehreren der vorhergehenden Ansprüche, **dadurch gekennzeichnet, dass** das Kreuzworträtsel digitale Informationen sind, die über das Internet oder Intranet ladbar sind und vorzugsweise in Form von Java, Javascript html, xhtml, .net abgelegt, so dass sie durch den Computer ausführbar sind, wobei die Spiellogik entweder vollständig, teilweise oder gar nicht auf dem Computer abläuft, oder alternativ auf einem Netzwerkserver.

11. Software für einen Computer, **dadurch gekennzeichnet, dass** ein Verfahren nach einem oder mehreren der vorhergehenden Ansprüche implementiert ist.

12. Datenträger für einen Computer, **gekennzeichnet durch** die Speicherung einer Software nach dem vorhergehenden Softwareanspruch.

13. Computersystem **gekennzeichnet durch** eine Einrichtung, die den Ablauf eines Verfahrens nach einem oder mehreren der vorhergehenden Verfahrensansprüche erlaubt.
